# EUROPEAN PATENT APPLICATION

(11) **EP 4 040 592 A1**
(43) Date of publication of application: **10.08.2022**
(21) Application number: 22153620.4
(22) Date of filing: 27.01.2022
(51) Int. Cl.: H01M 50/543, H01M 50/553, H01M 50/562, H01M 50/564

(54) **TERMINAL COMPONENT, SECONDARY BATTERY AND BATTERY PACK PROVIDED THEREWITH, AND METHOD FOR MANUFACTURING TERMINAL COMPONENT**

(30) Priority: 08.02.2021 JP 2021017983
(71) Applicant: Prime Planet Energy & Solutions, Inc., Chuo-ku Tokyo 103-0022 (JP); Fukui Byora Co., Ltd., Awara-city, Fukui 919-0898 (JP)
(72) Inventor: SAKURAI, Takahiro, Tokyo, 103-0022 (JP); SUZUKI, Kosuke, Tokyo, 103-0022 (JP); YONEDA, Koshiro, Tokyo, 103-0022 (JP); FUJITA, Eiichi, Awara-city, Fukui, 919-0898 (JP); TANIGUCHI, Akihiko, Awara-city, Fukui, 919-0898 (JP)
(74) Representative: Kuhnen & Wacker Patent- und Rechtsanwaltsbüro PartG mbB

(57) **Abstract**

A terminal component includes a first metal and a second metal overlapped on the first metal. The first metal is provided with a recess where an inside is wider than an opening at a portion overlapped with the second metal. A part of the second metal has entered the recess of the first metal, and the second metal has a portion that has entered a portion of the recess of the first metal where the inside is wider than the opening, and a recess on a surface opposite to the portion that has entered the recess of the first metal. At least a part of the portion of the second metal that has entered the recess of the first metal is metal-joined to the inner surface of the recess of the first metal.

## Description

### BACKGROUND OF THE INVENTION

### 1. Field of the Invention

The present disclosure relates to a terminal component, a secondary battery and a battery pack provided therewith, and a method for manufacturing a terminal component.

### 2. Description of the Related Art

Japanese Patent Application Publication No. 2016-18675 discloses joining a metal member to an external terminal by ultrasonic joining in order to improve the weldability between the external terminal and a bus bar. Japanese Patent Application Publication No. 2011-124024 discloses that a base to which a current collecting foil is connected and an external terminal are joined by ultrasonic joining, and then the joint is further caulked to improve the joining strength of both components.

### SUMMARY OF THE INVENTION

When a dissimilar metal is joined to a terminal by metal joining such as ultrasonic joining, the joining strength between the terminal and the metal may be insufficient. Therefore, a step of separately forming a caulking structure between the joined components is added after joining to improve the joining strength between the metal-joined components. Further, in order to ensure the required joining strength only by metal joining, it is necessary to join with high energy over a wide range of contact surface between the components. With such a joining method, the surface of the external terminal may be roughened or deformed. Removing the roughening and deformation of the surface of the external terminal by posttreatment increases the number of production steps and is not preferable from the viewpoint of productivity.

The present inventor would like to provide a terminal component for a secondary battery that is composed of two metals, the terminal component being joined with sufficient joining strength and being conductive. At the same time, the inventor would like to provide a technique for manufacturing such terminal component with a small number of production steps.

The terminal component disclosed herein includes a first metal and a second metal overlapped on the first metal. The first metal has a recess where an inside is wider than an opening at a portion overlapped with the second metal. A part of the second metal has entered the recess of the first metal, and the second metal has a portion that has entered a portion of the recess of the first metal where the inside is wider than the opening, and a recess formed on a surface opposite to the portion that has entered the recess of the first metal. At least a part of the portion of the second metal that has entered the recess of the first metal is metal-joined to the inner surface of the recess of the first metal.

In such a terminal component, the joining strength between the first metal and the second metal is ensured by the second metal entering the portion of the recess of the first metal where the inside is wider than the opening. Further, at least a part of the portion of the second metal that has entered the recess of the first metal is metal-joined to the inner surface of the recess of the first metal, thereby ensuring conduction between the members.

In the terminal component disclosed herein, the first metal may have higher rigidity than the second metal.

A diameter D₁ of the recess of the first metal and a diameter D₂ of the opening may satisfy the relationship of 0.4 ≤ D₂/D₁ ≤ 0.95. A further recess may be formed in a bottom portion of the recess of the first metal. The recess formed in the bottom portion may be provided with a portion where the inside is widened in the depth direction from the opening.

In the terminal component, the first metal may be configured of copper or an alloy mainly composed of copper, and the second metal may be configured of aluminum or an alloy mainly composed of aluminum.

A secondary battery including an electrode body including a positive electrode and a negative electrode, a battery case inside which the electrode body is accommodated, and a positive electrode terminal and a negative electrode terminal electrically connected to the positive electrode and the negative electrode, respectively, in the electrode body is provided as another aspect of the technique disclosed herein. At least one of the positive electrode terminal and the negative electrode terminal of the secondary battery includes the terminal component disclosed herein.

A battery pack in which a plurality of unit cells is arranged with electrical connection to each other, wherein secondary batteries including the terminal components disclosed herein are used as the plurality of unit cells, is provided as another aspect of the technique disclosed herein. In the plurality of unit cells, the positive electrode terminal of one unit cell and the negative electrode terminal of the other unit cell are electrically connected by a bus bar. The bus bar may be made of the same metal as the metal constituting the second metal.

The method for manufacturing a terminal component disclosed herein includes a step of preparing a first metal having a recess where an inside is wider than an opening, a step of preparing a second metal, and a step of metal-joining the first metal and the second metal to each other. In the step of metal-joining the first metal and the second metal, the second metal is overlapped on the portion of the first metal where the recess has been formed, the second metal is locally pressurized at a position corresponding to the recess of the first metal, a recess is formed in the second metal and a part of the second metal is caused to enter the portion of the recess of the first metal where the inside is wider than the opening, and the part of the second metal that has entered the recess of the first metal is metal-joined to the first metal.

In such a manufacturing method, in the step of metal-joining the first metal and the second metal, the second metal is locally pressurized, and a part of the second metal is caused to enter the portion of the recess of the first metal where the inside is wider than the opening. As a result, it is not necessary to separately provide a step of mechanically joining the first metal and the second metal by a method such as caulking, and the above-mentioned terminal component can be manufactured with a small number of production steps.

Further, by performing the metal joining of the first metal and the second metal inside the recess of the first metal, it is possible to suppress the roughening and deformation that may occur on the surface to be connected to a bus bar. As a result, the processing step aimed at removal of roughening and deformation of the surface on which the metal joint is performed can be eliminated.

In the method for manufacturing a terminal component disclosed herein, in the step of preparing the second metal, a second metal having a lower rigidity than the first metal may be prepared.

In the step of preparing a first metal, the first metal may be prepared in which a diameter D₁ of the recess of the first metal and a diameter D₂ of the opening satisfy the relationship of 0.4 ≤ D₂/D₁ ≤ 0.95. Further, in the step of preparing a first metal, the first metal having a further recess in a bottom portion of the recess may be prepared. The recess formed in the bottom portion may be provided with a portion where an inside is widened in the depth direction from an opening.

In the step of preparing a first metal, the first metal configured of copper or an alloy mainly composed of copper may be prepared, and in the step of preparing a second metal, the second metal configured of aluminum or an alloy mainly composed of aluminum may be prepared.

In the step of metal-joining the first metal and the second metal, metal joining may be performed by ultrasonic pressure welding, friction pressure welding or resistance welding.

### BRIEF DESCRIPTION OF THE DRAWINGS

FIG. 1 is a perspective view schematically showing the outer shape of a secondary battery 12;
FIG. 2 is a perspective view schematically showing a battery pack 10 configured of unit cells 12;
FIG. 3 is a cross-sectional view of a wide surface schematically showing the internal structure of the secondary battery 12;
FIG. 4 is a cross-sectional view of a narrow surface schematically showing the internal structure of the secondary battery 12.
FIG. 5 is a cross-sectional view schematically showing the structure of a lid 34 to which a terminal component 54 is attached;
FIG. 6 is a cross-sectional view schematically showing the terminal component 54;
FIG. 7 is a cross-sectional view schematically showing the terminal component 54 according to another embodiment;
FIG. 8 is a cross-sectional view illustrating a method for manufacturing the terminal component 54; and
FIG. 9 is a cross-sectional view illustrating a method for manufacturing the terminal component 54.

### DESCRIPTION OF THE PREFERRED EMBODIMENTS

Hereinafter, embodiments of a terminal component, a secondary battery provided with the terminal component, a battery pack having, as a constituent element, a unit cell provided with the terminal component, and a method for manufacturing the terminal component proposed herein will be described in detail by taking an angular lithium ion secondary battery provided with a wound electrode body as an example.

In the present description, the "secondary battery" is a concept not limited to the lithium ion secondary battery described below, and is inclusive of, for example, a sodium ion secondary battery, a magnesium ion secondary battery, or a lithium ion capacitor representing a so-called physical battery. Further, although a lithium ion secondary battery having a wound electrode body having a structure in which a plurality of positive electrode bodies and negative electrode bodies is wound with a separator interposed therebetween will be described herein, the electrode body is not limited to such a configuration, and a plurality of positive electrode bodies and negative electrode bodies may be laminated with a separator interposed therebetween.

In the drawings below, members and parts that perform the same action are given the same reference numerals, and duplicate explanations may be omitted or simplified. The dimensional relationships such as length and width in the drawings below do not necessarily reflect the actual dimensional relationships.

When a numerical range is described as A to B (here, A and B are arbitrary numerical values) in the present description, it means A or more and B or less. Further, in the present description, the "main body" means a component that occupies the maximum weight among arbitrary components, and for example, when the whole of the components is 100 parts by mass, the main body is a component that occupies 50 parts by mass or more.

In the present description, the metal joining refers to a joining state in which metals are directly joined to each other at a joining interface without using an adhesive or the like. Metal joining is realized by, for example, ultrasonic joining, friction pressure welding, diffusion welding, resistance welding, and the like, and mechanical joining states such as caulking are excluded.

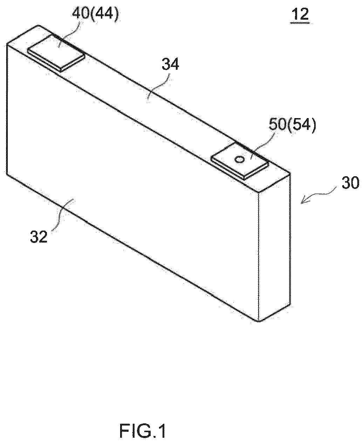

FIG. 1 is a perspective view schematically showing the outer shape of the secondary battery 12.

The secondary battery 12 is a secondary battery that can be repeatedly charged and discharged, for example, a lithium ion secondary battery. Although a detailed description of the structure will be omitted, the secondary battery 12 disclosed herein includes an electrode body 20 having a structure in which a positive electrode and a negative electrode are laminated with a separator interposed therebetween inside a battery case 30. Such an electrode body is accommodated together with a non-aqueous electrolytic solution (not shown) in a battery case main body 32, and the edge portion of a lid 34 is sealed and hermetically closed by welding or the like in a state where the inside is depressurized. For the battery case 30, for example, a lightweight metal material having good thermal conductivity such as aluminum is used. The shape of the battery case 30 is not limited to the angular shape as shown in FIG. 1, and may be, for example, a cylindrical shape.

The secondary battery 12 is provided with a positive electrode terminal 40 and a negative electrode terminal 50 at the upper part of the battery case 30. The positive electrode terminal 40 and the negative electrode terminal 50 are electrically connected to the electrode body inside the battery case and connected to the outside via a bus bar. The shapes of the positive electrode terminal 40 and the negative electrode terminal 50 are not particularly limited, and may be rectangular as shown, or may be, for example, of a circular shape including an elliptical shape.

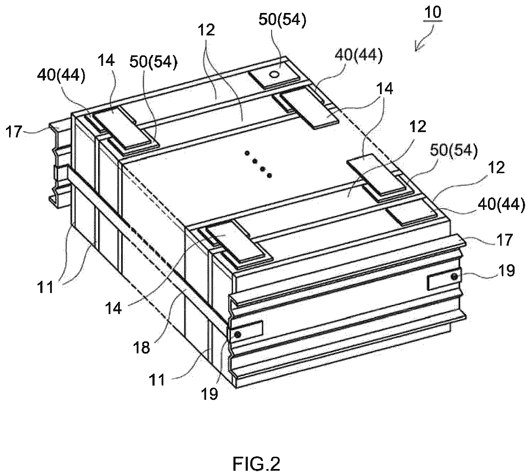

FIG. 2 is a perspective view schematically showing a battery pack 10 composed of the unit cells 12.

In the battery pack 10 in which a plurality of secondary batteries 12 shown in FIG. 1 is arranged as the unit cells 12, the unit cells 12 are arranged with a spacer 11 interposed therebetween. A pair of end plates 17 is arranged further outside the spacers 11 arranged on the outermost sides. These end plates are restrained by tightening beam materials 18 attached so as to bridge the end plates 17, and the end portions of the tightening beam materials 18 are tightened and fixed by screws 19.

In the battery pack 10, the positive electrode terminal 40 of the unit cell 12 is electrically connected by a bus bar 14 to the negative electrode terminal 50 of another unit cell 12 adjacent thereto. As the bus bar 14, for example, aluminum, copper, or the like is used.

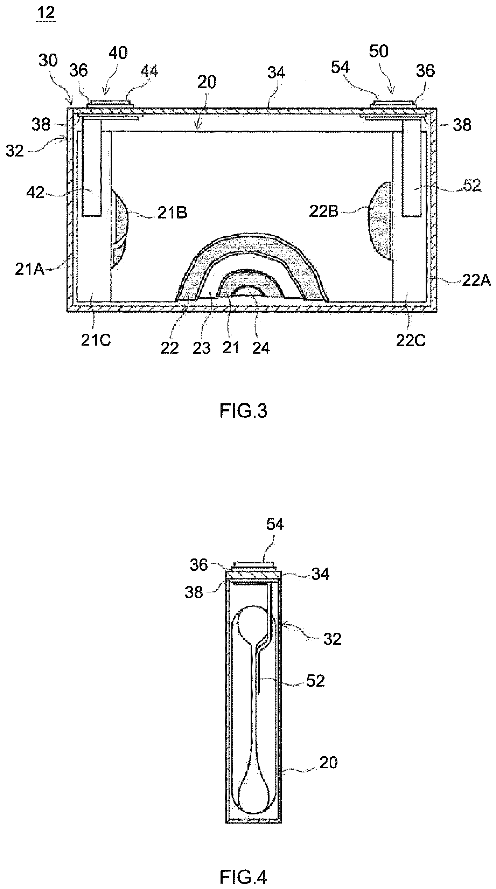

FIG. 3 is a cross-sectional view of a wide surface schematically showing the internal structure of the secondary battery 12.

The electrode body 20 is a power generation element accommodated inside the battery case 30 in a state of being covered with an insulating film or the like (not shown). The electrode body 20 includes a positive electrode sheet 21 as a positive electrode element, a negative electrode sheet 22 as a negative electrode element, and separator sheets 23 and 24 as separators. The positive electrode sheet 21, the negative electrode sheet 22, and the separator sheets 23 and 24 are each a long strip-shaped member. In the present embodiment, the electrode body 20 is a wound electrode body in which the positive electrode sheet 21, the negative electrode sheet 22, and the separator sheets 23 and 24 are wound.

The positive electrode sheet 21 includes a foil-shaped positive electrode current collector 21A and a positive electrode active material layer 21B formed on one side or both sides of the positive electrode current collector 21A along the longitudinal direction. Further, the positive electrode active material layer 21B is not formed on one side edge of the electrode body 20 in the width direction of the secondary battery 12, and a positive electrode current collector exposed portion 21C in which the positive electrode current collector 21A is exposed is provided. An aluminum foil or the like is used as the positive electrode current collector 21A. The positive electrode active material layer 21B includes various materials such as a positive electrode active material, a binder, a conductive material, and the like.

A positive electrode current collecting terminal 42 is connected to the positive electrode current collector exposed portion 21C. As the positive electrode current collecting terminal 42, for example, an aluminum foil or the like is used. A material that can be used in a conventional general lithium ion secondary battery can be used without particular limitation as the material contained in the positive electrode active material layer 21B, and this material does not characterize the present disclosure, so detailed description thereof will be omitted.

The negative electrode sheet 22 includes a foil-shaped negative electrode current collector 22A and a negative electrode active material layer 22B formed on one side or both sides of the negative electrode current collector 22A along the longitudinal direction. Further, the negative electrode active material layer 22B is not formed on the other side edge of the electrode body 20 in the width direction, and a negative electrode current collector exposed portion 22C in which the negative electrode current collector 22A is exposed is provided. A copper foil or the like is used as the negative electrode current collector 22A. Similar to the positive electrode active material layer 21B, the negative electrode active material layer 22B includes various materials such as a negative electrode active material, a binder, and the like.

A negative electrode current collecting terminal 52 is connected to the negative electrode current collector exposed portion 22C. As the negative electrode current collecting terminal 52, for example, a copper foil or the like is used. A material that can be used in a conventional general lithium ion secondary battery can be used without particular limitation as the material contained in the negative electrode active material layer 22B, and this material does not characterize the present disclosure, so detailed description thereof will be omitted.

The separator sheets 23 and 24 are interposed between the positive electrode sheet 21 and the negative electrode sheet 22 to prevent these electrodes from coming into direct contact with each other. Although not shown, the separator sheets 23 and 24 are formed with a plurality of fine holes. The fine holes are configured such that charge carriers (lithium ions in the case of a lithium ion secondary battery) move between the positive electrode sheet 21 and the negative electrode sheet 22.

Resin sheets or the like having the required heat resistance are used for the separator sheets 23 and 24. As the separator sheets 23 and 24, those that can be used in a conventional general lithium ion secondary battery can be used without particular limitation. Since the separator sheets 23 and 24 do not characterize the present disclosure, detailed description of the separator sheets 23 and 24 will be omitted.

As the non-aqueous electrolytic solution accommodated in the battery case 30, a non-aqueous electrolytic solution that typically includes a non-aqueous solvent and a supporting salt and is suitable for a conventional general lithium ion secondary battery can be used without particular limitation. Since the non-aqueous electrolytic solution does not characterize the present disclosure, detailed description of the non-aqueous electrolytic solution will be omitted.

FIG. 4 is a cross-sectional view of a narrow surface schematically showing the internal structure of the secondary battery 12. The negative electrode terminal 50 (see FIG. 1) is configured of a negative electrode current collecting terminal 52 and a negative electrode external terminal 54. In the present embodiment, the negative electrode current collecting terminal 52 is composed of a single plate-shaped member made of copper. As shown in FIG. 4, the negative electrode current collecting terminal 52 is bent inside the battery case 30 and is connected to the negative electrode external terminal 54 and the electrode body 20. The negative electrode external terminal 54 is connected to the negative electrode current collecting terminal 52, and a part of the negative electrode external terminal 54 is exposed on the outer surface of the lid 34.

Similarly, the positive electrode terminal 40 is configured of a positive electrode current collecting terminal 42 and a positive electrode external terminal 44. In the present embodiment, the positive electrode current collecting terminal 42 is composed of a single plate-shaped member made of aluminum. The positive electrode current collecting terminal 42 is bent inside the battery case 30 and is connected to the positive electrode external terminal 44 and the electrode body 20. The positive electrode external terminal 44 is connected to the positive electrode current collecting terminal 42, and a part of the positive electrode external terminal 44 is exposed on the outer surface of the lid 34.

Aluminum is preferably used for the positive electrode current collector 21A of the electrode body 20. A copper foil is preferably used for the negative electrode current collector 22A of the electrode body 20. It is preferable that the positive electrode current collecting terminal 42 and the negative electrode current collecting terminal 52 be made of the same metal as the respective current collector to be connected thereto. Therefore, it is preferable that aluminum be used for the positive electrode current collecting terminal 42. Copper is preferably used for the negative electrode current collecting terminal 52. Further, aluminum is preferably used for the bus bar 14 from the viewpoint of conductivity and small weight. Therefore, when copper is used for the negative electrode current collecting terminal 52 and the negative electrode external terminal 54 and aluminum is used for the bus bar 14, the metal type used for the negative electrode current collecting terminal 52 and the negative electrode external terminal 54 is different from that used for the bus bar 14. Accordingly, the present inventor has studied the possibility of adopting a terminal component in which aluminum and copper are joined in the negative electrode external terminal 54.

Hereinafter, the terminal component disclosed herein will be described based on the configuration in which the terminal component is used as the negative electrode external terminal 54. In the case where the positive electrode terminal 40 has the terminal component disclosed herein, the configuration is the same as in the case of the negative electrode terminal 50, and thus the description thereof will be omitted.

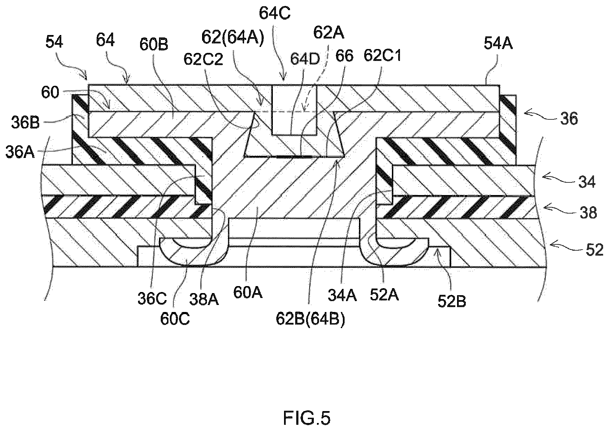

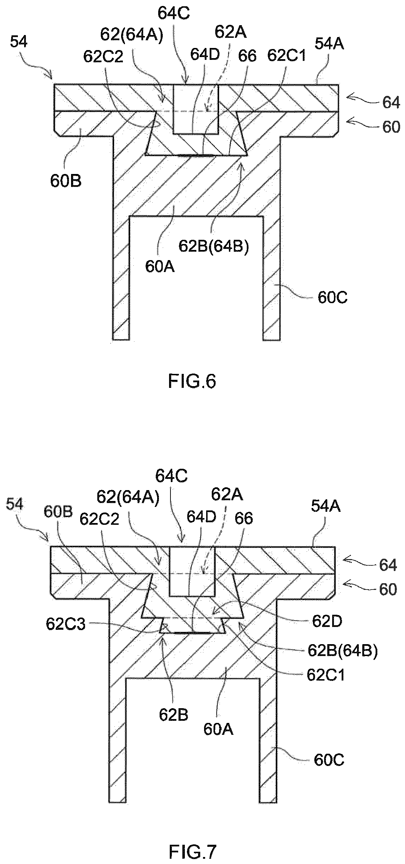

FIG. 5 is a cross-sectional view schematically showing the structure of the lid 34 to which the terminal component 54 is attached. FIG. 6 is a cross-sectional view schematically showing the terminal component 54. The terminal component 54 is attached to the lid 34 with a gasket 36 interposed therebetween. The negative electrode current collecting terminal 52 is attached to the lid 34 with an insulator 38 interposed therebetween.

As shown in FIG. 5, the lid 34 has an attachment hole 34A for attaching the terminal component 54 at a predetermined position. The negative electrode current collecting terminal 52 and the terminal component 54 are attached to the attachment hole 34A of the lid 34 with the gasket 36 and the insulator 38 interposed therebetween.

The terminal component 54 includes a first metal 60 and a second metal 64. As shown in FIGS. 5 and 6, the first metal 60 constituting the terminal component 54 includes a shaft portion 60A, an upper end portion 60B, and a caulking portion 60C. The shaft portion 60A is a portion to be mounted in the attachment hole 34A with the gasket 36 interposed therebetween. The shaft portion 60A has a cylindrical shape. The upper end portion 60B is arranged on the outside of the lid 34. The upper end portion 60B is a substantially flat portion larger than the attachment hole 34A. As shown in FIG. 5, the caulking portion 60C is caulked to the negative electrode current collecting terminal 52 inside the lid 34. The second metal 64 is overlapped on the upper end portion 60B of the first metal 60. On the surface where the second metal 64 is overlapped on the upper end portion 60B, the surfaces of the second metal 64 and the upper end portion 60B have the same shape. The detailed structure of the terminal component 54 will be described hereinbelow.

As shown in FIG. 5, the gasket 36 is a member attached to the attachment hole 34A of the lid 34. The gasket 36 includes a flat plate portion 36A, a side wall portion 36B, and a cylindrical portion 36C. The flat plate portion 36A has a shape that matches the surface of the terminal component 54 facing the lid 34. The side wall portion 36B extends vertically from the peripheral edge portion of the flat plate portion 36A. The cylindrical portion 36C protrudes from the bottom portion of the flat plate portion 36A. The cylindrical portion 36C has an outer shape along the inner surface of the attachment hole 34A. The cylindrical portion 36C serves as a mounting hole for mounting the shaft portion 60A of the first metal 60 constituting the terminal component 54.

The gasket 36 is a resin member having an insulating property, and insulates the terminal component 54 and the lid 34. The gasket 36 ensures the airtightness of the attachment hole 34A of the lid 34. From this point of view, the gasket 36 may be made of a material having excellent chemical resistance and weather resistance. As the gasket 36, for example, a fluororesin such as perfluoroalkoxy alkane (PFA) or the like can be used.

The insulator 38 is a member mounted inside the lid 34 around the attachment hole 34A of the lid 34. The insulator 38 is a substantially flat plate member. The insulator 38 includes a through hole 38A. The shaft portion 60A of the first metal 60 constituting the terminal component 54 is inserted into the through hole 38A. The through hole 38A has a shape corresponding to the outer shape of the shaft portion 60A of the first metal 60 constituting the terminal component 54.

The insulator 38 is a resin member having an insulating property. The insulator 38 insulates the lid 34 from the negative electrode current collecting terminal 52 and the terminal component 54. Since the insulator 38 is arranged inside the battery case 30, it is preferable that the insulator 38 have the required chemical resistance. As the insulator 38, for example, polyphenylene sulfide (PPS) or the like can be used.

The negative electrode current collecting terminal 52 is composed of one plate-shaped member as described above. The negative electrode current collecting terminal 52 is arranged inside the insulator 38. The negative electrode current collecting terminal 52 includes a through hole 52A. The shaft portion 60A of the first metal 60 constituting the terminal component 54 is inserted into the through hole 52A. The through hole 52A has a shape corresponding to the outer shape of the shaft portion 60A of the first metal 60 constituting the terminal component 54. The negative electrode current collecting terminal 52 is provided with a step 52B around the through hole 52A. The tip of the caulking portion 60C of the first metal 60 is hooked on and fixed to the step 52B.

In the present embodiment, the gasket 36 is attached to the outside of the lid 34 while the cylindrical portion 36C of the gasket 36 is mounted on the attachment hole 34A of the lid 34. Further, the terminal component 54 is mounted on the gasket 36. At this time, the shaft portion 60A of the first metal 60 is inserted into the cylindrical portion 36C of the gasket 36, and the upper end portion 60B of the first metal 60 is arranged on the flat plate portion 36A of the gasket 36. The insulator 38 and the negative electrode current collecting terminal 52 are attached to the inside of the lid 34. As shown in FIG. 5, the caulking portion 60C of the first metal 60 is bent and caulked to the negative electrode current collecting terminal 52. It is preferable that the caulking portion 60C of the first metal 60 and the negative electrode current collecting terminal 52 be partially metal-joined in order to improve the conduction.

The terminal component 54 includes the first metal 60 and the second metal 64. As the first metal 60, a metal having a higher rigidity than the second metal 64 can be used. Here, the rigidity of the first metal 60 may be higher than the rigidity of the second metal 64 to a degree such that when the second metal 64 is strongly pressed against the first metal 60, the first metal 60 is not deformed but the second metal 64 is deformed. In the present embodiment, the first metal 60 is configured of copper. The second metal 64 is configured of aluminum. The rigidity of the first metal 60 and the second metal 64 can be evaluated by, for example, a Vickers hardness test or a tensile test.

The first metal 60 has a recess 62 at a portion overlapped with the second metal 64. The recess 62 has a portion 62B where the inside is wider than an opening 62A. In the present description, the portion 62B where the inside is widened refers to a space between the projection surface of the opening 62A and the recess 62 of the first metal 60 when the opening of the recess of the first metal is projected vertically from the opening in the depth direction.

In the present embodiment, the recess 62 of the first metal 60 has a substantially circular transverse cross section along a cross section taken at the same depth from the opening 62A. The surface area of the recess 62 of the first metal 60 gradually increases with the depth from the opening 62A. The recess 62 has a substantially truncated cone-shaped space. The surface area of a bottom portion 62C1 of the recess 62 is larger than the surface area of the opening 62A. In the recess 62, the cross-sectional area of the transverse cross section along a cross section taken at the same depth from the opening 62A becomes narrower from the bottom portion 62C1 toward the opening 62A. In other words, the recess 62 has a shape in which a side peripheral surface 62C2 projects radially inward with respect to the bottom portion 62C1. The recess 62 of the first metal 60 having such a shape can be formed by, for example, forging or cutting.

In the above-described embodiment, the recess 62 of the first metal 60 is a substantially truncated cone-shaped space in which the inside is wider than the opening 62A. The recess 62 may have a portion where the inside is wider than the opening 62A. The shape of the recess 62 is not limited to such a shape. For example, in a transverse cross section along a cross section taken at the same depth from the opening 62A, the recess 62 is not limited to a circular shape, and may have a polygonal shape such as a triangle, a quadrangle, a pentagon, a hexagon, and the like. In the present embodiment, the recess 62 of the first metal 60 is a substantially truncated cone-shaped space. The recess 62 is formed with a portion 62B in which the inside is continuously wider than the opening in the circumferential direction.

The recess 62 is not limited to such a form. The recess 62 may be formed with a portion 62B where the inside is partially wider than the opening in the circumferential direction. Further, in the present embodiment, the opening 62A of the recess 62 of the first metal 60 is circular, but it does not necessarily have to be circular. The opening 62A of the recess 62 may be narrower than the inside of the widened recess 62. The opening 62A of the recess 62 may have, for example, a portion protruding radially inward with respect to the inside of the widened recess 62 in a part in the circumferential direction. In this case, it is preferable that the portions protruding radially inward be provided at a plurality of locations, for example, 2 to 4 locations in the circumferential direction of the recess 62.

The second metal 64 is overlapped on the portion of the first metal 60 provided with the recess 62. In the present embodiment, the peripheral edge portion of the second metal 64 overlaps on the peripheral edge portion of the upper end portion 60B of the first metal 60. In the second metal 64, the surface opposite to the surface overlapped on the upper end portion 60B of the first metal 60 is exposed to the outside of the battery case 30. The exposed surface 54A is connected to a bus bar or the like.

A part of the second metal 64 has entered the recess 62 of the first metal 60. The second metal 64 has a portion 64A that has entered the recess 62 of the first metal 60, and a recess 64C formed on a surface opposite to the portion 64A that has entered the recess 62 of the first metal 60. Hereinafter, the portion 64A that has entered the recess 62 of the first metal 60 is referred to, as appropriate, as a fitting portion 64A. Further, of the fitting portion 64A, a portion 64B that has entered the portion 62B that is wider than the opening 62A in the depth direction of the recess 62 of the first metal 60 is particularly referred to as a fitting portion 64B.

As shown in FIG. 5, the second metal 64 is in contact with the bottom portion 62C1 of the recess 62 of the first metal 60. Further, the fitting portion 64B has sufficiently deeply penetrated into the portion 62B of the recess 62 of the first metal 60 where the inside is wider than the opening 62A. That is, the fitting portion 64B meshes with the side peripheral surface 62C2 of the recess 62. With such a configuration, the first metal 60 and the second metal 64 are ensured to have sufficient mechanical fastening strength. It is permissible that a gap be present between the recess 62 of the first metal 60 and the second metal 64.

In the present embodiment, the transverse cross section of the recess 64C of the second metal 64 along the cross section taken at the same depth from the opening 62A is substantially circular. The recess 64C of the second metal 64 is formed at a position corresponding to the recess 62 of the first metal 60. As shown in FIG. 5, in the present embodiment, the recess 64C of the second metal 64 reaches a position deeper than the opening 62A of the recess 62 of the first metal 60.

The shape of the recess 64C of the second metal 64 and the shape of the bottom portion 64D are not limited to this embodiment. The recess 64C of the second metal 64 may have a substantially prismatic shape, for example, having a polygonal cross section such as a quadrangle. Further, the bottom portion 64D does not necessarily have to be flat. For example, the bottom portion 64D may have a shape that becomes deeper from the peripheral edge toward the center. Meanwhile, the bottom portion 64D may have a shape such that the peripheral edge is deep with respect to the center. The depth of the recess 64C of the second metal 64 is not particularly limited. The depth of the recess 64C of the second metal 64 may be, for example, greater than or equal to the depth of the recess 62 of the first metal 60 so that the first metal 60 and the second metal 64 be joined with sufficient joining strength.

Of the second metal 64, at least a part of the portion 64A that has entered the recess 62 of the first metal 60 is metal-joined to the inner surface of the recess 62 of the first metal 60. As described above, the fitting portion 64A of the second metal 64 is in contact with the bottom portion 62C1 of the recess 62 of the first metal 60. The fitting portion 64A is metal-joined to the inner surface of the recess 62 of the first metal 60, that is, to at least a part of the surface including the bottom portion 62C1 and the side peripheral surface 62C2. In the present embodiment, a metal joint is formed inside a surface where the bottom portion 64D of the recess 64C of the second metal 64 is projected onto the bottom portion 62C1 of the recess 62 of the first metal 60. Here, the portion where the first metal 60 and the second metal 64 are metal-joined is referred to, as appropriate, as a joint 66. The position where the first metal 60 and the second metal 64 are metal-joined is not limited to this. The metal joint between the first metal 60 and the second metal 64 may be formed on, for example, the side peripheral surface 62C2 of the recess 62. The joint 66 is obtained by joining without an adhesive layer such as an adhesive or solder. In the joint 66, the surfaces on which the first metal 60 and the second metal 64 are joined can be joined by so-called solid phase joining. At the joint 66, metal joining may occur at least in parts of the first metal 60 and the second metal 64. Since metal joining occurs between the first metal 60 and the second metal 64, the electric resistance between the first metal 60 and the second metal 64 is lowered, and good conduction is ensured.

The first metal 60 has the recess 62 where the inside is wider than the opening 62A. The second metal 64 enters the portion 62B of the recess 62 of the first metal 60 where the inside is wider than the opening 62A. Further, the second metal 64 is metal-joined to the inner surface of the recess 62 of the first metal 60. As a result, the first metal 60 and the second metal 64 are ensured to have sufficient mechanical fastening strength and conduction due to the low electrical resistance required for battery terminals.

The recess 62 of the first metal 60 may have, for example, a shape such that the recess 62 of the first metal 60 gradually widens in the depth direction. The depth of the recess 62 of the first metal 60 may be 0.2 to 2.0 with respect to the diameter of the opening 62A. The ratio D₂/D₁ of the diameter D₂ of the opening 62A to the diameter D₁ of the recess 62 of the first metal 60 is preferably 0.95 or less, and more preferably 0.9 or less. Further, D₂/D₁ is preferably 0.4 or more, and more preferably 0.5 or more. When D₂/D₁ has such a value, a space for the second metal 64 to enter is advantageously formed in the widened portion 62B of the recess 62 of the first metal 60, and the first metal 60 and the second metal 64 are joined well. The diameter of the recess 62 means the diameter of the widest portion of the transverse cross section along the cross section taken at the same depth from the opening 62A.

FIG. 7 is a cross-sectional view schematically showing the terminal component 54 according to another embodiment.

In the embodiment shown in FIG. 7, a recess 62D is further formed in the bottom portion of the recess 62. The recess 62D is further provided with the portion 62B where the inside is widened in the depth direction from the opening of the recess 62D. The recess 62D has a shape in which a side peripheral surface 62C3 projects radially inward with respect to the bottom portion 62C1. Meanwhile, in the second metal 64, the portion 64A that has entered the recess 62 of the first metal 60 has also entered the recess 62D formed in the bottom portion of the recess 62. Further, in the bottom portion of the recess 62D, the first metal 60 and the second metal 64 are metal-joined.

With this embodiment, the portion 64A of the second metal 64 that has entered the recess 62 of the first metal 60 meshes with both the side peripheral surface 62C2 of the recess 62 of the first metal 60 and the side peripheral surface 62C3 of the recess 62D formed in the bottom portion. Therefore, the first metal 60 and the second metal 64 are mechanically more strongly fastened, and the conduction due to a low electrical resistance required for the battery terminal is ensured.

In the embodiment shown in FIG. 7, a substantially truncated cone-shaped space is formed in the recess 62D formed in the bottom portion. The recess 62D may be any one that strengthens mechanical joining of the first metal 60 and the second metal 64 that has entered the recess 62 of the first metal 60. From this point of view, the recess 62D formed in the bottom portion of the recess 62 of the first metal 60 is not limited to the shape shown in FIG. 7. For example, a plurality of stepwise recesses may be formed in the bottom portion of the recess 62. Further, the recess 62D formed in the bottom portion may be a partial one or may be formed intermittently in the circumferential direction.

In the embodiment disclosed herein, the first metal 60 of the terminal component 54 constituting the negative electrode external terminal is configured of copper, and the second metal 64 is configured of aluminum. The first metal 60 of the terminal components 54 is joined to the copper negative electrode current collecting terminal 52 inside the battery case 30. The second metal 64 of the terminal components 54 is joined to the aluminum bus bar 14 outside the battery case 30. By using such a terminal component 54 for the negative electrode external terminal 54, satisfactory conduction and joining to the copper negative electrode current collecting terminal 52 is performed inside of the battery case 30. Further, outside the battery case 30, satisfactory conduction and joining to the aluminum bus bar 14 are performed. Further, the first metal 60 and the second metal 64 of the terminal component 54 have the required mechanical fastening strength, and also the conduction due to a low electrical resistance required for the battery terminal is ensured. Therefore, although dissimilar metals of copper and aluminum are joined in the negative electrode external terminal 54 configured of the terminal component 54, conduction failure is unlikely to occur even if an external force such as vibration is received from the bus bar 14.

By adopting the terminal component disclosed herein in a secondary battery, it is possible to match the metal types of the portions of the positive electrode external terminal and the negative electrode external terminal of the secondary battery that are to be connected to the bus bar. Therefore, it is possible to satisfactorily connect adjacent unit cells in a battery pack.

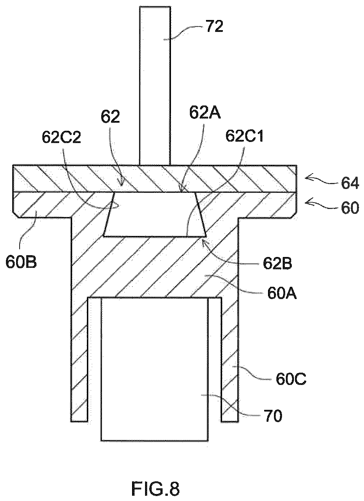

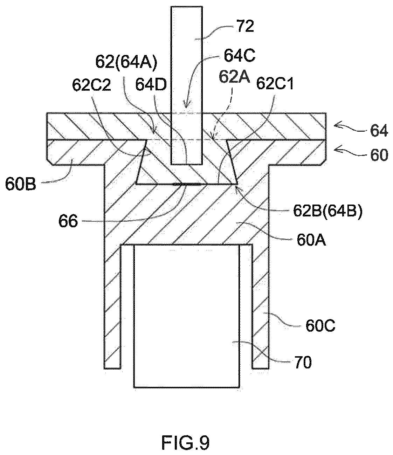

A method for manufacturing the terminal component 54 described above will be described hereinbelow. FIGS. 8 and 9 are cross-sectional views illustrating a method for manufacturing the terminal component 54. The method for manufacturing the terminal component 54 includes a step of preparing the first metal 60, a step of preparing the second metal 64, and a step of metal-joining the first metal 60 and the second metal 64.

In the step of preparing the first metal, a first metal having the recess 62 where the inside is wider than the opening 62A is prepared. In this embodiment, the first metal 60 is configured of copper. Since the shape of the first metal 60 is the same as that in the above-described embodiment, detailed description thereof will be omitted.

The first metal 60 can be manufactured by, for example, forming the recess 62 in the first metal 60 by performing known metal processing such as forging or cutting on the metal which is the material of the first metal 60.

The recess 62 of the first metal 60 may be designed to have a size such that the first metal 60 and the second metal 64 are mechanically joined with sufficient strength when the second metal 64 is inserted into the recess in a later step. In the present embodiment, the recess 62 of the first metal 60 has a circular cross section. As shown in FIG. 8, in the recess 62 of the first metal 60, the surface area of the bottom portion 62C1 is larger than the surface area of the opening 62A, and the inner diameter of the recess decreases from the bottom portion 62C1 toward the opening 62A.

In the process of preparing the second metal 64, a second metal having a lower rigidity than the first metal is prepared. In the present embodiment, the second metal 64 is a plate-shaped member made of aluminum. The shape and dimensions of the second metal 64 are set, as appropriate, according to the type of the second metal 64, the shape of the recess 62 of the first metal 60, and the like. The shape and dimensions of the second metal 64 are not particularly limited as long as the second metal 64 can enter the portion 62B of the recess 62 of the first metal 60 where the inside is wider than the opening in a later step and has the strength and thickness such that the second metal 64 is not penetrated by the press described hereinbelow.

In the step of metal-joining the first metal 60 and the second metal 64, the second metal 64 is overlapped on the portion of the first metal 60 where the recess 62 has been formed. Then, the second metal 64 is partially pressurized at the position corresponding to the recess 62 of the first metal 60 to form the recess 64C in the second metal 64 and to cause a part of the second metal 64 to enter the portion 62B of the recess 62 of the first metal 60 where the inside is wider than the opening 62A. Further, the first metal 60 and a part of the second metal 64 that has entered the recess 62 of the first metal 60 are metal-joined.

The metal joining between the first metal 60 and the second metal 64 is performed by, for example, ultrasonic pressure welding. For example, as shown in FIG. 8, the first metal 60 is placed at an anvil 70. Next, the second metal 64 is overlapped on the surface of the first metal 60 having the recess 62. Next, a horn 72 is pressed against the second metal 64. As a result, the first metal 60 and the second metal 64 are sandwiched between the anvil 70 and the horn 72. Here, the position where the horn 72 is pressed corresponds to the recess 62 of the first metal 60, that is, the opening 62A of the recess 62 in the portion where the second metal 64 is overlapped on the first metal 60. The region where the horn 72 is pressed against the second metal 64 is set inside the opening 62A of the recess 62. The horn 72 having a surface area smaller than that of the opening 62A is used.

The horn 72 is attached to a press machine (not shown) equipped with a vibration generator. As shown in FIG. 9, the horn 72 is pressed against the second metal 64 while applying the vibration required for ultrasonic pressure welding. As a result, the second metal 64 is pushed into the recess 62 of the first metal 60. When the second metal 64 is pushed into the first metal 60, the second metal 64 is plastically deformed and deeply penetrates into the recess 62 of the first metal 60, and at the same time, the recess 64C is formed on the surface against which the horn 72 is pressed. Further, the first metal 60 and a part of the second metal 64 that has entered the recess 62 of the first metal 60 are metal-joined. The second metal 64 is pushed into the opening 62A of the first metal 60 to such an extent that the recess 64C is formed on the surface against which the horn 72 is pressed. Therefore, a part of the second metal 64 can be caused to enter as far as the portion 62B of the recess 62 of the first metal 60 where the inside is wider than the opening 62A. As a result, the side peripheral surface 62C2 of the recess 62 of the first metal 60 and the second metal 64 that has entered the recess 62 mesh with each other. Therefore, the first metal 60 and the second metal 64 are mechanically firmly fastened, and conduction is established between the first metal 60 and the second metal 64 at a low electrical resistance required for the battery terminal. Thus, according to the method proposed herein, mechanical joining and metal joining of the first metal 60 and the second metal 64 are carried out at the same time. Therefore, the terminal component 54 can be manufactured with a small number of steps.

Here, the pressure applied from the horn 72 to the second metal 64 by the press machine is set, as appropriate, according to the metal type and dimensions of the first metal 60 and the second metal 64, the shape of the horn 72, and the like. The press pressure can be set to, for example, about 50 N to 1600 N, but this range is not limiting.

The ultrasonic vibration applied through the horn 72 is set, as appropriate, according to the metal type and dimensions of the first metal 60 and the second metal 64, the shape of the horn 72, and the like. The amplitude can be set to, for example, about 20 µm to 80 µm, the frequency can be set to about 15 kHz to 150 kHz, and the amount of energy given to the first metal 60 and the second metal 64 can be set to about 100 J to 500 J, but these ranges are not limiting.

In the above-described embodiment, the metal joining between the first metal 60 and the second metal 64 is performed by pressurizing a part of the second metal 64 while applying vibration to the horn 72, but such an embodiment is not limiting. For example, it is possible, first, to pressurize the second metal 64, insert the second metal 64 into the recess 62 of the first metal 60, bring the second metal 64 into contact with the bottom portion 62C1 of the recess 62 of the first metal 60, and then apply vibration to the horn 72 to perform metal joining. Further, in the above-described embodiment, the first metal 60 and the second metal 64 are metal-joined by ultrasonic pressure welding, but the present disclosure is not limited to this embodiment. The metal joining between the first metal 60 and the second metal 64 can be performed by a known method, for example, friction pressure welding, resistance welding, or the like.

As described above, when the first metal 60 is metal-joined to the second metal 64 while forming the recess 64C in the second metal, roughening and deformation due to the application of vibrations performed while pressurizing the horn 72 can be seen at the bottom portion 64D of the recess 64C of the second metal. For example, when metal joining is performed by ultrasonic pressure welding, a residue of the second metal 64 due to processing may remain on the bottom portion 64D. When metal joining is performed by friction pressure welding, friction marks may remain on the bottom portion 64D due to the pressure welding accompanied by rotation. When metal joining is performed by resistance welding, discoloration due to oxidation of the surface can be seen on the bottom portion 64D.

In the manufacturing method described above, the bottom portion 62C1 of the recess 62 of the first metal 60 and the portion of the second metal that has entered the recess of the first metal are metal-joined at the same time as pressurization. By simultaneously performing the mechanical joining by pressurization and the metal joining in this manner, the terminal component 54 can be manufactured with a small number of process steps. Further, the roughening and deformation of the second metal 64 due to the metal joining occurs on the bottom portion 64D, so that the roughening and deformation of the surface of the terminal component 54 to be connected to the bus bar and the like can be suppressed.

In the above-described embodiment, the second metal 64 has a lower rigidity than the first metal 60. Therefore, the second metal 64 can be plastically deformed with a low pressure. As a result, it is possible to manufacture the terminal component 54 in which roughening and deformation are suppressed.

The dimensions of the recess 62 of the first metal 60 prepared in the step of preparing the first metal 60 are not particularly limited. For example, the ratio D₂/D₁ of the diameter D₂ of the opening 62A to the diameter D₁ of the recess 62 is preferably 0.95 or less, and more preferably 0.9 or less. Further, D₂/D₁ is preferably 0.4 or more, and more preferably 0.5 or more. When D₂/D₁ has such a value, a space for introducing the second metal 64 can be advantageously formed in the widened portion 62B of the recess 62 of the first metal 60.

When D₂/D₁ is large, that is, close to 1, a structure such that a part of the second metal 64 enters the portion 62B where the inside is wider than the opening of the recess 62 of the first metal 60 is not formed and the joined state is difficult to maintain. Further, when D₂/D₁ is small, a large gap may be formed between the recess of the first metal 60 and the second metal 64. When a large gap is formed in this way, the second metal 64 is not in close contact with the inside of the recess 62 of the first metal 60, and when an impact is applied from the outside due to vibration or the like, the joined state of the first metal 60 and the second metal 64 may not be maintained.

In the step of preparing the first metal 60, as shown in FIG. 7, the recess 62D may be further formed in the bottom portion of the recess 62 of the first metal 60. The recess 62D may be provided with a portion where the inside is widened in the depth direction from the opening. Such a recess 62D can be formed by subjecting the first metal 60 to metal processing by a known method.

By such a manufacturing method, the close contact state between the first metal 60 and the second metal 64 is advantageously maintained, and the terminal component 54 in which the first metal 60 and the second metal 64 are mechanically more strongly fastened can be manufactured.

Although specific examples of the present disclosure have been described in detail above, these are merely examples and do not limit the scope of claims. The disclosure disclosed herein is inclusive of various changes and modifications of the above specific examples.

## Claims

1. A terminal component (54) comprising:
a first metal (60) and
a second metal (64) overlapped on the first metal (60), wherein
the first metal (60) is
provided with a recess (62) where an inside is wider than an opening (62A) at a portion overlapped with the second metal (64),
a part of the second metal (64) has entered the recess (62) of the first metal (60), and the second metal (64) has
a portion (64A) that has entered a portion (62B) of the recess (62) of the first metal (60) where the inside is wider than the opening (62A), and
a recess (64C) formed on a surface opposite to the portion (64A) that has entered the recess (62) of the first metal (60), and
at least a part of the portion (64A) of the second metal (64) that has entered the recess (62) of the first metal (60) is metal-joined to the inner surface of the recess (62) of the first metal (60).

2. The terminal component (54) according to claim 1, wherein the first metal (60) has higher rigidity than the second metal (64).

3. The terminal component (54) according to claim 1 or 2, wherein a diameter D₁ of the recess (62) of the first metal (60) and a diameter D₂ of the opening (62A) satisfy a relationship of 0.4 ≤ D₂/D₁ ≤ 0.95.

4. The terminal component (54) according to any one of claims 1 to 3, wherein a further recess (62D) is formed in a bottom portion (62C1) of the recess (62) of the first metal (60), and the recess (62D) formed in the bottom portion (62C1) is provided with a portion where the inside is widened in the depth direction from the opening.

5. The terminal component (54) according to any one of claims 1 to 4, wherein the first metal (60) is configured of copper or an alloy mainly composed of copper, and the second metal (64) is configured of aluminum or an alloy mainly composed of aluminum.

6. A secondary battery (12) comprising:
an electrode body (20) including a positive electrode and a negative electrode;
a battery case (30) inside which the electrode body (20) is accommodated; and
a positive electrode terminal (40) and a negative electrode terminal (50) electrically connected to the positive electrode and the negative electrode, respectively, in the electrode body (20), wherein
at least one of the positive electrode terminal (40) and the negative electrode terminal (50) includes the terminal component (54) according to any one of claims 1-5.

7. A battery pack (10) comprising a plurality of unit cells (12) is arranged with electrical connection to each other, wherein
the secondary battery (12) according to claim 6 is used as each of the plurality of unit cells (12).

8. The battery pack (10) according to claim 7,
in the plurality of unit cells (12), a positive electrode terminal (40) of one unit cell (12) and a negative electrode terminal (50) of the other unit cell (12) are electrically connected by a bus bar (14), wherein
the bus bar (14) is made of the same metal as a metal constituting the second metal (64).

9. A method for manufacturing a terminal component (54), comprising:
a step of preparing a first metal (60) having a recess (62) where an inside is wider than an opening (62A);
a step of preparing a second metal (64); and
a step of metal-joining the first metal (60) and the second metal (64) to each other, wherein
in the step of metal-joining,
the second metal (64) is overlapped on the portion of the first metal (60) where the recess (62) has been formed,
the second metal (64) is locally pressurized at a position corresponding to the recess (62) of the first metal (60), a recess (64C) is formed in the second metal (64) and a part of the second metal (64) is caused to enter the portion (64A) of the recess (62) of the first metal (60) where the inside is wider than the opening (62A), and
the part of the second metal (64) that has entered the recess (62) of the first metal (60) is metal-joined to the first metal (60).

10. The method for manufacturing a terminal component (54) according to claim 9, wherein in the step of preparing a second metal (64), the second metal (64) having a lower rigidity than the first metal (60) is prepared.

11. The method for manufacturing a terminal component (54) according to claim 9 or 10, wherein in the step of preparing a first metal (60), the first metal (60) is prepared in which a diameter D₁ of the recess (62) of the first metal and a diameter D₂ of the opening (62A) satisfy a relationship of 0.4 ≤ D₂/D₁ ≤ 0.95.

12. The method for manufacturing a terminal component (54) according to any one of claims 9 to 11, wherein in the step of preparing first metal (60), the first metal (60) in which a recess (62D) is further formed in a bottom portion (62C1) of the recess (62) and the recess (62D) formed in the bottom portion (62C1) is provided with a portion where an inside is widened in the depth direction from an opening is prepared.

13. The method for manufacturing a terminal component (54) according to any one of claims 9 to 12, wherein in the step of preparing first metal (60), the first metal configured of copper or an alloy mainly composed of copper is prepared, and in the step of preparing a second metal (64), the second metal (64) configured of aluminum or an alloy mainly composed of aluminum is prepared.

14. The method for manufacturing a terminal component (54) according to any one of claims 9 to 13, wherein in the step of metal-joining, metal joining is performed by ultrasonic pressure welding, friction pressure welding or resistance welding.
